(19) Europäisches Patentamt
European Patent Office
Office européen des brevets

(11) **EP 4 230 501 B1**

(12) **EUROPÄISCHE PATENTSCHRIFT**

(45) Veröffentlichungstag und Bekanntmachung des Hinweises auf die Patenterteilung:
**14.05.2025 Patentblatt 2025/20**

(21) Anmeldenummer: **23156106.9**

(22) Anmeldetag: **10.02.2023**

(51) Internationale Patentklassifikation (IPC):
**B61L 25/02** *(2006.01)* **G01P 3/66** *(2006.01)*
**G01P 3/80** *(2006.01)* **G01C 22/00** *(2006.01)*
**G01B 7/02** *(2006.01)* **B61L 15/00** *(2006.01)*

(52) Gemeinsame Patentklassifikation (CPC):
**G01P 3/66; B61L 15/0072; B61L 25/021; B61L 25/026; G01C 22/00; G01P 3/803**

(54) **VERFAHREN UND VORRICHTUNG ZUR ERFASSUNG EINER BEWEGUNG EINES SCHIENENFAHRZEUGS ENTLANG EINES SCHIENENWEGS**

METHOD AND APPARATUS FOR DETECTING A MOVEMENT OF A RAIL VEHICLE ALONG A RAIL PATH

PROCÉDÉ ET APPARÉIL DE DÉTECTION D'UN MOUVEMENT D'UN VÉHICULE FERROVIAIRE LE LONG D'UN TRAJET FERROVIAIRE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **21.02.2022 CH 1702022**

(43) Veröffentlichungstag der Anmeldung:
**23.08.2023 Patentblatt 2023/34**

(73) Patentinhaber: **Enotrac AG**
**3600 Thun (CH)**

(72) Erfinder:
• **ZOLLINGER, Ernst**
**8500 Frauenfeld (CH)**

• **VENNEMANN, Tarek**
**1143 Apples (CH)**
• **BLEIKER, Andreas**
**3653 Oberhofen (CH)**
• **SCHULZE, Jens**
**3600 Thun (CH)**

(74) Vertreter: **Keller Schneider**
**Patent- und Markenanwälte AG**
**Eigerstrasse 2**
**Postfach**
**3000 Bern 14 (CH)**

(56) Entgegenhaltungen:
**EP-A1- 3 663 769         EP-B1- 1 910 848**
**DE-A1- 102016 105 413**

**Beschreibung**

**Technisches Gebiet**

Die Erfindung betrifft ein Verfahren zur Erfassung einer Bewegung eines Schienenfahrzeugs entlang eines Schienenwegs und eine an einem Schienenfahrzeug anbringbare Vorrichtung zur Durchführung eines solchen Verfahrens.

**Stand der Technik**

Aus Sicherheitsgründen sind moderne Schienenfahrzeuge mit einem Zugsicherungssystem ausgestattet. Dieses Zugsicherungssystem überwacht die Geschwindigkeit des Schienenfahrzeugs auf die erlaubte Höchstgeschwindigkeit sowie die Einhaltung der festgelegten Geschwindigkeitsabnahme in Übereinstimmung mit der sogenannten Bremskurve durch Bremsung des Zuges, z. B. bei der Einfahrt in einen Bahnhof. Die verlässliche, zeitgenaue und präzise Kenntnis der Fahrzeuggeschwindigkeit gegenüber dem Boden ist dabei von ausschlaggebender Bedeutung.

Um die benötigte Genauigkeit der Fahrzeuggeschwindigkeit zu erreichen, verwenden herkömmliche Messverfahren heute eine I<ombination von mehreren verschiedenartigen Sensoren. Diese werden insbesondere aus folgenden ausgewählt:

- Radwegaufnehmer,

- Radarsensoren,

- optische Wegaufnehmer,

- Trägheitsnavigationssysteme und

- globale Satellitennavigationssysteme.

Eine Kombination ist erforderlich, da keine Sensortechnologie allein die geforderte Zuverlässigkeit und Präzision zu gewährleisten vermag, insbesondere weil

- Radwegaufnehmer durch den unvermeidlichen Schlupf des Rades gegenüber der Schiene bei angetriebenen und gebremsten Rädern unpräzise Informationen liefern, die nicht der benötigten wahren Geschwindigkeit relativ zum Boden bzw. Schienenweg (True Ground Speed TGS) entsprechen,

- Radarsensoren bei Schnee, Eis und Schmutz versagen,

- optische Wegaufnehmer in ihrer Funktion durch Schmutz und Staub beeinträchtigt sind,

- Trägheitsnavigationssysteme empfindlich auf Stösse und Vibrationen reagieren,

- globale Satellitennavigationssignale in Tunnels und engen Bergtälern nicht oder nicht zuverlässig verfügbar sind.

Bei diesen herkömmlichen Methoden kumulieren sich die Messfehler unwillkürlich in kurzer Zeit, was streckenseitig viele teure Ortungsbaken in Form von Eurobalisen zur Rekalibrierung der fahrzeugseitigen Odometrie erfordert.

Diese Einschränkungen behebt die magnetische Odometrie wie sie etwa im Artikel von K. Ostaszewski et al.: "Magnetische Odometrie - Neuartige Methode zur Bestimmung der Fahrgeschwindigkeit von Schienenfahrzeugen", ZEVrail, S. 332-339, 09/2021 oder in der EP 3 663 769 A1 (MagSens Unternehmergesellschaft) beschrieben ist.

Das Funktionsprinzip basiert auf der Messung der magnetischen Inhomogenitäten der Gleisanlage und deren Untergrundes. Daraus ergeben sich magnetische Signaturen als ortsabhängige Abweichungen des Magnetfeldes, die durch Magnetometer erfasst werden können und die Charakteristiken aufweisen, die eine Wiedererkennung erlauben. Es wird nun die Tatsache ausgenutzt, dass auf hinreichend kleinen Zeitskalen die magnetische Signatur an einem Ort unverändert bleibt, so dass zwei längs der Fahrtrichtung voneinander getrennte Magnetometer dieselbe magnetische Signatur zeitlich versetzt messen. Die magnetischen Signaturen werden von mindestens zwei in Fahrtrichtung räumlich getrennt angeordneten Magnetometern erfasst, die meist über der Schiene am Fahrzeug angeordnet sind. Bei bekanntem, festem Abstand $\Delta l$ zweier Magnetometer in Fahrtrichtung und dem mittels Korrelation gemessenen zeitlichen Versatz $\Delta t(t)$ der von zwei Magnetometern gemessenen Signaturen ergibt sich die Fahrzeuggeschwindigkeit $v(t)$ als Verhältnis

von $\Delta l$ zu $\Delta t(t)$.

Diesem magnetischen Odometrie-Verfahren wohnen jedoch zwei prinzipielle Mängel inne:

1. Bei abnehmender Fahrzeuggeschwindigkeit v(t) wächst der zeitliche Versatz $\Delta t(t)$, was eine zeitgenaue Bestimmung der Fahrzeuggeschwindigkeit verunmöglicht.

2. Damit verbunden erlaubt dieses magnetische Odometrie-Verfahren keine Stillstandserkennung. Diese ist jedoch bei Schienenfahrzeugen von essenzieller Bedeutung, da sicherheitsrelevante Fahrzeugfunktionen, wie etwa die Freigabe von Türen, davon abhängen.

Die EP 1 910 848 B1 (Pirelli & C. S. p. A.) offenbart ein Verfahren und ein System, um die Geschwindigkeit eines sich bewegenden Objekts genau zu messen. Dazu werden mehrere Sensoren eingesetzt, die in einer bekannten Distanz zueinander angeordnet sind, um Messsignale zu erzeugen, die physikalischen Grössen entsprechen, die durch die Bewegung des Objekts beeinflusst werden. Anschliessend wird die Geschwindigkeit aus den Ableitungen dieser Signale berechnet.

**Darstellung der Erfindung**

Aufgabe der Erfindung ist es, ein dem eingangs genannten technischen Gebiet zugehörendes Verfahren zur Erfassung einer Bewegung eines Schienenfahrzeugs zu schaffen, welches auch bei tiefen Geschwindigkeiten aktuelle und präzise Ergebnisse ermöglicht.

Die Lösung der Aufgabe ist durch die Merkmale des Anspruchs 1 definiert. Gemäss der Erfindung umfasst ein Verfahren zur Erfassung einer Bewegung eines Schienenfahrzeugs entlang eines Schienenwegs folgende Schritte:

a) innerhalb eines ersten Zeitintervalls Erfassen von Werten einer lokalen magnetischen Flussdichte mittels mindestens drei in einer Fahrtrichtung des Schienenfahrzeugs beabstandet am Schienenfahrzeug angeordneten Magnetfeldsensoren;

b) Ermitteln einer ersten lokalen magnetischen Signatur aus den im ersten Zeitintervall erfassten Werten, entsprechend einem ersten ortsabhängigen Verlauf der lokalen magnetischen Flussdichte;

c) innerhalb eines zweiten Zeitintervalls Erfassen von Werten der lokalen magnetischen Flussdichte mittels der mindestens drei am Schienenfahrzeug angeordneten Magnetfeldsensoren;

d) Ermitteln einer zweiten lokalen magnetischen Signatur aus den im zweiten Zeitintervall erfassten Werten, entsprechend einem zweiten ortsabhängigen Verlauf der lokalen magnetischen Flussdichte; und

e) Bestimmen einer vom Schienenfahrzeug zurückgelegten Wegstrecke entlang des Schienenwegs aus einem Vergleich der ersten lokalen magnetischen Signatur mit der zweiten lokalen magnetischen Signatur.

Das Verfahren dient somit zur Ermittlung der wahren Geschwindigkeit gegenüber dem Schienenweg bzw. dem Boden (True Ground Speed).

Das erste Zeitintervall und das zweite Zeitintervall sind wie weiter unten näher spezifiziert derart kurz, dass die Messwerte - unter der Berücksichtigung der Fahrgeschwindigkeit des Schienenfahrzeugs - die Ermittlung der lokalen magnetischen Signatur erlauben und dass letztlich - im Rahmen der benötigten Genauigkeit - eine Bestimmung der Bewegungsparameter in Echtzeit möglich ist.

Im Rahmen des erfindungsgemässen Verfahrens ist es nicht notwendig, Absolutwerte der magnetischen Flussdichte zu bestimmen. Weil Zielgrössen letztlich aus dem Vergleich der lokalen magnetischen Signaturen abgeleitet werden, genügen relative Grössen, auch solche, die nur von der magnetischen Flussdichte abhängig sind, z. B. Ausgangsströme oder Spannungen von entsprechenden Sensoren, wobei sich die mindestens drei genutzten Sensoren gleich verhalten sollen. Geeignete Magnetfeldsensoren (Magnetometer) sind z. B. Hall-Sensoren, magnetoresistive Sensoren oder Förster-Sonden bzw. Saturationskern-Magnetometer (Flux-gate-Magnetometer).

Die mindestens drei Magnetfeldsensoren sind bevorzugt parallel zur Fahrtrichtung angeordnet, so dass unmittelbar der Verlauf der magnetischen Flussdichte entlang einer Linie parallel zum Fahrweg aufgenommen wird. Grundsätzlich ist es aber auch denkbar, dass die Magnetfeldsensoren nicht nur in Fahrtrichtung sondern auch in einer horizontalen Richtung senkrecht dazu beabstandet sind. Grundsätzlich sind auch Anordnungen möglich, bei denen die Sensoren unterschiedliche Abstände zum Fahrweg aufweisen. Insbesondere kann es von Vorteil sein, wenn zusätzlich zur Anordnung der Magnetfeldsensoren in einer Linie parallel zur Fahrtrichtung des Schienenfahrzeugs weitere Magnetfeldsensoren senkrecht zur Fahrtrichtung (horizontal und/oder vertikal) angeordnet sind, mit dem Ziel, Störaussendungen des Schienenfahrzeugs möglichst frei von magnetischen Signaturen zu erfassen. Die so getrennt erfassten Störsignale lassen sich dann durch destruktive Interferenz in den gemessenen magnetischen Signaturen so berücksichtigen, dass der Störsignalanteil in den Messungen der magnetischen Signaturen deutlich reduziert wird.

Generell kann eine Bearbeitung der Sensorsignale, insbesondere das Herausfiltern von Störsignalen, hilfreich sein, um die nachfolgende Ermittlung der magnetischen Signatur zu verbessern.

Erfasst wird im Rahmen des erfindungsgemässen Verfahrens primär das Magnetfeld, das sich aus der Struktur der Gleisanlage und allenfalls benachbarter Umgebungselemente ergibt. Gesonderte Elemente zur Beeinflussung des Magnetfelds wie z. B. am Schienenweg angeordnete Permanentmagnete, wie sie zur Zugbeeinflussung eingesetzt werden, sind nicht notwendig. Sind solche Elemente vorhanden, führen sie aber auch nicht zu einer Beeinträchtigung des erfindungsgemässen Verfahrens.

Bei einer lokalen magnetischen Signatur handelt es sich um einen ortsabhängigen Verlauf der magnetischen Flussdichte, insbesondere entlang einer Linie parallel zum Fahrweg. Die Verwendbarkeit als Signatur im vorliegenden Verfahren setzt voraus, dass der Absolutwert des Gradienten der Flussdichte im betrachteten Raum zumindest bereichsweise einen gewissen minimalen Wert übersteigt. Für das Verfahren ist es grundsätzlich nicht erheblich, welcher Ort als Anfang und welcher Ort als Ende einer solchen Signatur betrachtet wird. Untersuchungen haben jedenfalls gezeigt, dass die magnetische Flussdichte auf Skalen von weniger als einem Meter erhebliche Variationen aufweist. Es reicht somit aus, den Verlauf der Flussdichte in einem entsprechend dimensionierten Bereich zu erfassen und auszuwerten.

Der Vergleich der ersten lokalen magnetischen Signatur mit der zweiten lokalen magnetischen Signatur entspricht im Wesentlichen der Ermittlung eines räumlichen Versatzes, der sich aus der zeitlich versetzten Bestimmung der Signaturen ergibt - im Gegensatz zur Bestimmung des zeitlichen Versatzes bei vorbekannten magnetischen Odometrie-Verfahren. Im Rahmen des erfindungsgemässen Verfahrens werden die Signaturen quasi in Echtzeit, während des Befahrens des Schienenwegs, aufgenommen und zur Bestimmung der Wegstrecke herangezogen, es ist kein Vergleich mit Daten erforderlich, die während früherer Fahrten aufgezeichnet wurden.

Das neue magnetische Odometrie-Verfahren behebt die vorgenannten Mängel der vorbekannten Verfahren. Es erlaubt die präzise und zeitgenaue Bestimmung der in einem Zeitintervall zurückgelegten Wegstrecke, auch bei langsamen Bewegungen des Schienenfahrzeugs. Damit wird unmittelbar auch eine zuverlässige Geschwindigkeitsbestimmung ermöglicht sowie eine Erkennung des Fahrzeugstillstands bzw. sehr langsamer Fahrzeugbewegungen.

Die Messrate ist an sich frei wählbar und kann - im Rahmen der Leistungsfähigkeit der eingesetzten Sensor- und Verarbeitungsmittel - bei Bedarf ohne Weiteres auch sehr hoch gewählt werden.

Mit Vorteil ist eine Abtastrate der mindestens drei Sensoren derart gewählt, dass ein zeitlicher Abstand der zweiten lokalen magnetischen Signatur von der ersten lokalen magnetischen Signatur nicht wesentlich grösser ist als das Verhältnis zwischen dem gegenseitigen Abstand von benachbarten der mindestens drei Magnetfeldsensoren und einer erwarteten Geschwindigkeit des Schienenfahrzeugs, d. h.

$$\Delta\tau(t_i) \leq a\frac{\Delta l}{v(t_i)}$$

wobei $\Delta\tau(t_i)$ den aktuellen zeitlichen Abstand (also den Kehrwert der Abtastrate), $v(t_i)$ die erwartete Geschwindigkeit und $\Delta l$ den Abstand benachbarter Sensoren bezeichnen und $a \leq 2$, bevorzugt $a \leq 1.5$, besonders bevorzugt $a \leq 1.2$. Dadurch wird sichergestellt, dass die örtliche Verschiebung des Schienenfahrzeugs relativ zu einer bestimmten Signatur zuverlässig erfasst wird.

In jedem Fall sollte sichergestellt werden, dass der zeitliche Abstand nicht grösser ist als das Verhältnis zwischen dem Abstand des ersten und letzten der mindestens drei Magnetfeldsensoren und einer erwarteten Geschwindigkeit des Schienenfahrzeugs.

Bei einer ersten Gruppe von bevorzugten Ausführungsformen sind benachbarte der mindestens drei Sensoren jeweils in gleicher Distanz zueinander angeordnet, parallel zur Fahrtrichtung.

Bei einer zweiten Gruppe von bevorzugten Ausführungsformen sind die Abstände jeweils benachbarter Sensoren unterschiedlich. In diesem Fall wird mit Vorteil das Verhältnis zwischen dem kleinsten Abstand und der erwarteten Geschwindigkeit betrachtet. Zur Verarbeitung der Signale von nicht äquidistant angeordneten Sensoren werden mit Vorteil die Abtastwerte in einem ersten Schritt auf Werte in äquidistanten Abständen interpoliert. Die weitere Verarbeitung erfolgt dann genauso wie bei Signalen äquidistanter Sensoren. Mit einer nicht-äquidistanten Anordnung der Magnetfeldsensoren kann den Gegebenheiten an der Unterseite des Schienenfahrzeugs Rechnung getragen werden, die eine Anordnung von Magnetfeldsensoren nur in gewissen Bereichen erlauben.

Dabei kann die erwartete Geschwindigkeit anhand von vorbestimmten Geschwindigkeiten des Schienenfahrzeugs veränderlich festgelegt werden. Beispielsweise wird die zuletzt bestimmte Geschwindigkeit herangezogen, wobei beim Unterschreiten einer gewissen Minimalgeschwindigkeit eine gewisse minimale Abtastrate zum Einsatz kommt, so dass innerhalb der geforderten Zeit zwischen einem Stillstand und einer Bewegung des Schienenfahrzeugs unterschieden werden kann. Es ist ebenfalls möglich, verschiedene Abtastraten vorzugeben, die z. B. im Stillstand, in einem ersten, tieferen Geschwindigkeitsbereich, und in einem zweiten, höheren Geschwindigkeitsbereich zum Einsatz kommen. Selbstverständlich sind auch mehr als drei Vorgabewerte für die Abtastrate möglich.

Anstelle einer variablen Geschwindigkeit kann auch ein fester Wert der Geschwindigkeit gewählt werden, z. B. die maximal zugelassene Geschwindigkeit des Schienenfahrzeugs. Daraus ergibt sich eine gewisse Abtastrate, mit der sichergestellt ist, dass auch bei hohen Geschwindigkeiten verlässliche Daten erfasst werden.

Bevorzugt überschreiten eine Dauer des ersten Zeitintervalls und eine Dauer des zweiten Zeitintervalls den zeitlichen Abstand der zweiten lokalen magnetischen Signatur von der ersten lokalen magnetischen Signatur nicht. Dies stellt sicher, dass die lokale Signatur im Wesentlichen zu zwei bestimmten Zeitpunkten erfasst wird und eine Bestimmung des örtlichen Versatzes möglich wird.

In ersten Ausführungsformen des erfindungsgemässen Verfahrens werden im ersten Zeitintervall die Werte von den mindestens drei Magnetfeldsensoren im Wesentlichen gleichzeitig erfasst und werden im zweiten Zeitintervall die Werte von den mindestens drei Magnetfeldsensoren im Wesentlichen gleichzeitig erfasst. "Im Wesentlichen gleichzeitig" bedeutet, dass sich aufgrund von Latenzzeiten geringfügige zeitliche Unterschiede ergeben können. Diese können in der Praxis derart gering gehalten werden, dass sie keine nennenswerte Beeinträchtigung der Signalqualität zur Folge haben.

In zweiten Ausführungsformen des erfindungsgemässen Verfahrens werden im ersten Zeitintervall die Werte von mindestens zwei der mindestens drei Magnetfeldsensoren zeitlich versetzt erfasst und werden im zweiten Zeitintervall die Werte von mindestens zwei der mindestens drei Magnetfeldsensoren zeitlich versetzt erfasst. Dabei ist ein Versatz bevorzugt so gewählt, dass eine zeitliche Abfolge der Erfassung in Fahrtrichtung erfolgt, d. h. in einem bestimmten Messzyklus messen die in Fahrtrichtung hinten liegenden Sensoren zuerst, weiter vorne liegende Sensoren danach. Bevorzugt liegt bei identischen Abständen jeweils benachbarter Sensoren ein identischer zeitlicher Versatz zwischen benachbarten Sensoren vor, d. h. es ergibt sich eine Abfolge von Messungen "von hinten nach vorne" mit jeweils gleichem zeitlichem Abstand zwischen aufeinanderfolgenden Messungen.

Der Versatz kann konstant vorgegeben oder anhand von Fahrparametern, z. B. der aktuellen Geschwindigkeit, dynamisch variiert werden.

Die Magnetfeldsensoren können aber auch in Gruppen zusammengefasst werden, wobei Sensoren einer bestimmten Gruppe im Wesentlichen gleichzeitig messen.

Die zeitlich versetzte Erfassung kann die Signalverarbeitung vereinfachen. Insbesondere ermöglicht sie aber auch, bei einer Messabfolge in Fahrtrichtung, eine Vergrösserung des effektiven Abstands der Messorte in den beiden Zeitintervallen, wenn die Geschwindigkeit des Schienenfahrzeugs zunimmt. Aufgrund der entsprechend längeren Basis ergibt sich eine höhere Messgenauigkeit.

Mit Vorteil übersteigt ein maximaler gegenseitiger Abstand der mindestens drei Magnetfeldsensoren in Fahrtrichtung eine maximale Länge zu erfassender magnetischer Signaturen. Dabei können sich aufgrund der magnetischen Inhomogenitäten der Gleisanlage (und aufgrund weiterer Einflüsse unabhängig von der Gleisanlage) grundsätzlich Signaturen ganz unterschiedlicher Länge ergeben. Im Rahmen des erfindungsgemässen Verfahrens ist es weder notwendig, noch erstrebenswert, alle möglichen Signaturen zu erfassen und für die Bestimmung der Bewegung des Schienenfahrzeugs heranzuziehen. Es reicht völlig aus, wenn im betrachteten Längenbereich ausreichend viele lokale Signaturen vorhanden sind, damit entlang des gesamten Schienenwegs und bei allen relevanten Geschwindigkeiten des Schienenfahrzeugs stets die örtliche Verschiebung des Fahrzeugs relativ zu mindestens einer erfassten Signatur bestimmt werden kann. Die maximale Länge der zu erfassenden magnetischen Signaturen ist somit eine Grösse, die anhand der Charakteristik des Schienenwegs vorgebbar ist.

Ein gegenseitiger Abstand von benachbarten der mindestens drei Magnetfeldsensoren in Fahrtrichtung ist insbesondere derart gewählt, dass das Abtasttheorem von Nyquist in Bezug auf die für die Bestimmung der Wegstrecke relevanten Anteile der magnetischen Signaturen im Ortsbereich erfüllt ist. Dies stellt sicher, dass die lokale Signatur mit Hilfe der mindestens drei Magnetfeldsensoren tatsächlich erfasst werden kann. Auch hier geht es wiederum nur um die für die Bestimmung der Bewegung relevanten Signaturen. Das Nyquist-Abtasttheorem (auch Nyquist-Shannon-Abtasttheorem bzw. WI<S-Abtasttheorem) besagt, dass ein auf eine maximale Frequenz $f_{max}$ begrenztes Signal aus einer Folge von äquidistanten Abtastwerten rekonstruiert werden kann, wenn es mit einer Frequenz von mindestens $2\,f_{max}$ abgetastet wurde. Daraus ergibt sich im vorliegenden Fall ohne weiteres eine Bedingung für die Distanzen der Sensoren im Ortsbereich. Weil wie oben erläutert nicht sämtliche Signaturen erfasst werden müssen, sondern nur solche in einem gewissen Längenbereich und entsprechend solche in einem gewissen Frequenzbereich, kann eine solche maximale Frequenz festgelegt werden. Entsprechend können die betrachteten lokalen Signaturen bei der Einhaltung des Abtasttheorems aus den vorgenommenen Messungen rekonstruiert werden.

Unter Berücksichtigung der vorgenannten Randbedingungen ergeben sich, ausgehend von der Charakteristik der vorhandenen Signaturen und der maximalen Geschwindigkeit des Schienenfahrzeugs Informationen zur Anzahl der Magnetfeldsensoren, zu deren gegenseitigen Abständen und zur Abtastrate.

In bevorzugten Ausführungsformen der Erfindung kommen insbesondere 10 - 50 Magnetfeldsensoren zum Einsatz, wobei die gegenseitigen Abstände benachbarter Sensoren untereinander gleich sind und 1 -20 cm betragen.

Im Rahmen des erfindungsgemässen Verfahrens wird insbesondere die momentane Geschwindigkeit des Schienenfahrzeugs relativ zum Schienenweg (True Ground Speed) bestimmt. Dazu umfasst es den zusätzlichen Schritt des Bestimmens der momentanen Geschwindigkeit als Verhältnis zwischen der bestimmten Wegstrecke $\Delta x(t)$ und dem zeitlichen Abstand $\Delta\tau$ der zweiten lokalen magnetischen Signatur von der ersten lokalen magnetischen Signatur. Für die Bestimmung der Geschwindigkeit können mehr als eine der bestimmten Wegstrecken herangezogen werden, z. B. unter Einsatz eines geeigneten Filters wie eines gleitenden Durchschnitts mit einer geeigneten Gewichtung oder eines Kalman-Filters.

Das erfindungsgemässe Verfahren ist auch besonders gut zur Stillstandserkennung des Schienenfahrzeugs geeignet. Diese erfolgt ohne Weiteres anhand der bestimmten Wegstrecke, Stillstand entspricht der Beziehung $\Delta x(t) = 0$. Im Gegensatz zu vorbekannten Verfahren, wo bei geringen Geschwindigkeiten ein erheblicher zeitlicher Abstand berücksichtigter Messungen notwendig ist, ermöglicht das erfindungsgemässe Verfahren durch die im Wesentlichen unmittelbare Erfassung einer gesamten lokalen Signatur die Erkennung einer Bewegung auch bei zeitlich nah beieinander liegenden Messungen. Dies ist von grosser Bedeutung, da die sichere Erkennung des Fahrzeugstillstands mit sicherheitsrelevanten Funktionen, wie etwa der Freigabe der Türen zu deren Öffnung, verbunden ist. Entsprechend ist auch die schnelle Erkennung des Losrollens eines Schienenfahrzeugs sicherheitstechnisch von Vorteil, um bei Bedarf ohne Verzögerung Gegenmassnahmen oder eine Alarmierung auszulösen.

Zur Funktionskontrolle des erfindungsgemässen Verfahrens wird mit Vorteil ein Testsignal entsprechend einer vorgegebenen Fahrgeschwindigkeit ausserhalb eines möglichen Geschwindigkeitsbereichs erzeugt und auf Stufe der Magnetfeldsensoren eingekoppelt. Das analoge oder digitale Testsignal entspricht einem möglichen Verlauf einer realen Signatur. Insbesondere ist die vorgegebene Fahrgeschwindigkeit höher als eine vom Schienenfahrzeug erreichbare Maximalgeschwindigkeit. Die Einkopplung kann vor den Magnetfeldsensoren erfolgen, indem ein Magnetfeld anhand des Testsignals erzeugt und von den Magnetfeldsensoren erfasst wird, oder es wird unmittelbar nach den Magnetfeldsensoren eingekoppelt, indem das Testsignal mit dem jeweiligen Sensorsignal überlagert wird. Die nachfolgende Verarbeitung stützt sich dann auf das überlagerte Signal.

Weil das Testsignal die ganze Signalverarbeitungskette durchläuft, können anhand von Abweichungen der bestimmten Geschwindigkeit von der vorgegebenen Geschwindigkeit Funktionsstörungen unmittelbar erkannt werden.

Insbesondere erfolgt die Einkopplung permanent, so dass das System ständig überwacht wird. Alternativ ist auch eine periodische Überprüfung anhand von temporär eingekoppelten Testsignalen möglich.

Zur Durchführung des erfindungsgemässen Verfahrens zur Erfassung einer Bewegung des Schienenfahrzeugs entlang eines Schienenwegs eignet sich insbesondere eine an einem Schienenfahrzeug anbringbare Vorrichtung, umfassend

a) mindestens drei in einer Fahrtrichtung des Schienenfahrzeugs beabstandet am Schienenfahrzeug angeordnete Magnetfeldsensoren;

b) eine Steuerung, die Messsignale von den mindestens drei Magnetfeldsensoren empfängt und derart betrieben wird, dass die Bewegung des Schienenfahrzeugs anhand der Messsignale gemäss dem vorstehenden beschriebenen erfindungsgemässen Verfahren ermittelt wird.

Die Magnetfeldsensoren können dabei auf einem gemeinsamen Träger bzw. in einem gemeinsamen Gehäuse oder auch separat oder in Gruppen am Schienenfahrzeug angeordnet werden.

Aus der nachfolgenden Detailbeschreibung und der Gesamtheit der Patentansprüche ergeben sich weitere vorteilhafte Ausführungsformen und Merkmalskombinationen der Erfindung.

**Kurze Beschreibung der Zeichnungen**

Die zur Erläuterung des Ausführungsbeispiels verwendeten Zeichnungen zeigen:

Fig. 1A     eine schematische Darstellung eines Schienenfahrzeugs mit einer ersten Ausführungsform eines erfindungsgemässen Systems zur Erfassung einer Bewegung des Schienenfahrzeugs;

Fig. 1B     den Verlauf einer Komponente der magnetischen Flussdichte entlang eines Schienenwegs;

Fig. 1C     die Positionen der Magnetfeldsensoren des erfindungsgemässen Systems entlang des Schienenwegs während aufeinanderfolgender Messungen;

Fig. 1D     den Vergleich der lokalen magnetischen Signaturen gemäss aufeinanderfolgenden Messungen;

Fig. 2A   eine schematische Darstellung eines Schienenfahrzeugs mit einer zweiten Ausführungsform eines erfindungsgemässen Systems zur Erfassung einer Bewegung des Schienenfahrzeugs;

Fig. 2B   den Verlauf einer Komponente der magnetischen Flussdichte entlang eines Schienenwegs;

Fig. 2C   die Positionen der Magnetfeldsensoren des erfindungsgemässen Systems entlang des Schienenwegs während aufeinanderfolgender Messungen; und

Fig. 2D   den Vergleich der lokalen magnetischen Signaturen gemäss aufeinanderfolgender Messungen.

Grundsätzlich sind in den Figuren gleiche Teile mit gleichen Bezugszeichen versehen.

## Wege zur Ausführung der Erfindung

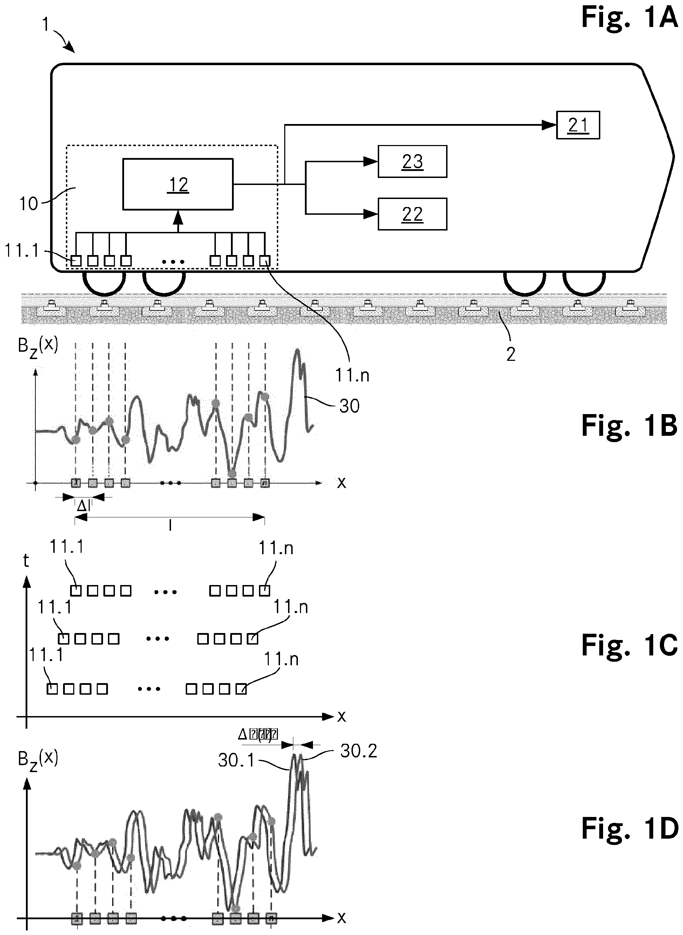

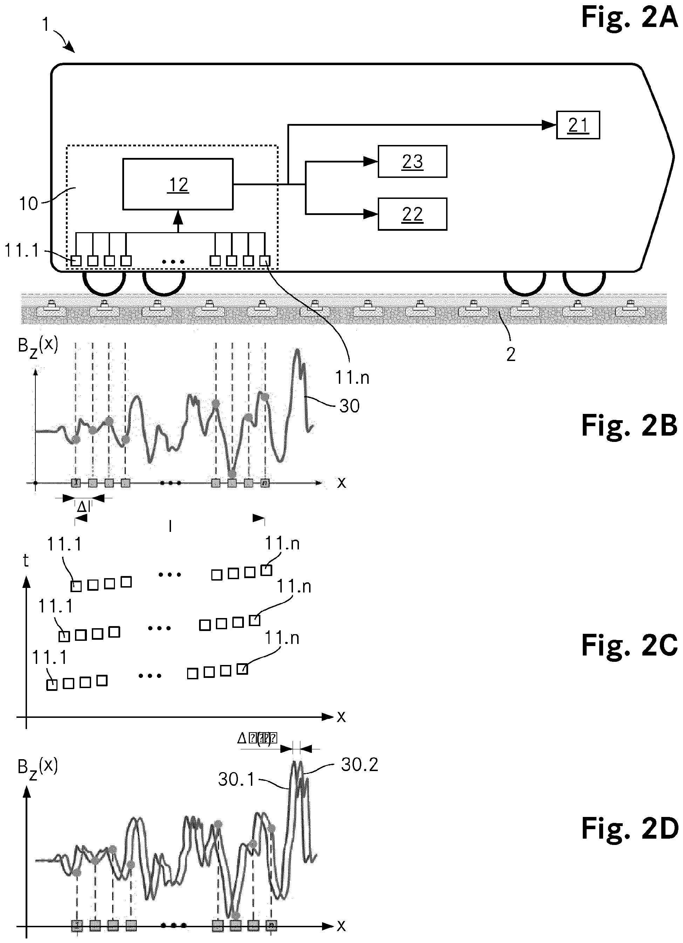

Nachfolgend werden anhand der Figuren 1A-D und 2A-D zwei Ausführungsbeispiele eines erfindungsgemässen Systems und Verfahrens zur Ermittlung der Geschwindigkeit $v(t_i)$ eines entlang eines Fahrwegs 2 bewegten Schienenfahrzeugs 1 zu einem Zeitpunkt $t_i$ dargestellt. Nebst der Geschwindigkeit liefert das System bzw. Verfahren ebenfalls Informationen über den aktuellen Ort $x(t_i)$ und ermöglicht eine zuverlässige Stillstandserkennung, entsprechend $\Delta x(t_i) = 0$ im zurückliegenden Zeitintervall $\Delta \tau(t_i) = t_i - t_{i-1}$. Das Verfahren zeichnet sich dadurch aus, dass die Bestimmung der erwähnten Grössen mit einer wählbaren und bei Bedarf hohen zeitlichen Genauigkeit und mit hoher wählbarer Rate $R$ erfolgt.

Bei der ersten beschriebenen Ausführungsform gemäss den Figuren 1A-1D werden die Messwerte mittels $n$ Magnetfeldsensoren gleichzeitig erfasst. Bei der später beschriebenen zweiten Ausführungsform gemäss den Figuren 2A-2D werden die Messwerte in schneller zeitlicher Abfolge nacheinander erfasst.

Das Verfahren gemäss beiden Ausführungsformen basiert auf der Messung der magnetischen Inhomogenitäten der Gleisanlage und des Gleisuntergrundes. Diese bilden charakteristische lokale Signaturen, wobei diese auf hinreichend kleinen Zeitskalen an einem Ort im Wesentlichen unverändert bleiben. Diese Signaturen werden von n Magnetfeldsensoren 11.1...11.n des erfindungsgemässen Systems 10 im zeitlichen Abstand $\Delta \tau$ gemessen, mit dem Ziel, die örtliche Verschiebung $\Delta x(t)$ der Signaturen relativ zum Schienenfahrzeug 1 präzise, zeitgenau und mit einer hohen wählbaren Messrate zu bestimmen. Dies im Gegensatz zu magnetischen Odometrie-Verfahren nach dem Stand der Technik, bei denen die zeitliche Verschiebung $\Delta t(t)$ der Signatur beim Befahren über eine zeitliche Korrelation bestimmt wird.

Die n Magnetfeldsensoren 11.1...11.n sind im Bodenbereich des Schienenfahrzeugs 1 gleichmässig auf einer Linie angeordnet, die sich im Wesentlichen oberhalb einer Schiene in Fahrtrichtung und parallel zur Schienenlauffläche erstreckt. Sämtliche Magnetfeldsensoren 11.1...11.n sind gleichartig ausgebildet und kalibriert. Im Rahmen des erfindungsgemässen Verfahrens lassen sich verschiedene Magnetfeldsensor-Typen verwenden, darunter insbesondere Hall-Sensoren, magnetoresistive Sensoren und Förster-Sonden bzw. Saturationskern-Magnetometer (Fluxgate-Magnetometer).

Bei der Anzahl und Platzierung der Magnetfeldsensoren werden folgende Rahmenbedingungen eingehalten:

- Die Länge $l = (n-1)\,\Delta l$ der $n$ hintereinander angeordneten Magnetfeldsensoren übersteigt die maximale Länge $L$ einer magnetischen Signatur, $l > L$;

- Der Abstand $\Delta l$ benachbarter Magnetfeldsensoren erfüllt das Abtasttheorem von Nyquist (H. Nyquist: "Certain Topics in Telegraph Transmission Theory", Transactions of the American Institute of Electrical Engineers, Vol. 47, No. 2, S. 617-644, 4/1928) in Bezug auf die für die Bestimmung des Ortes und der Geschwindigkeit relevanten Anteil der der magnetischen Signaturen im Ortsbereich.

Die Bestimmung der Grössen $L$, $l$ und $\Delta l$ basiert auf ausgedehnten Messungen der magnetischen Signaturen entlang einer Vielzahl von Strecken mit wechselstrombasierten Bahnstromversorgungen aller üblichen Frequenzen wie etwa 16.7 Hz und 50 Hz, Strecken mit gleichstrombasierten Bahnstromversorgungen und nicht elektrifizierten Bahnstrecken mit Brücken vielfältiger Bauart, Tunnels und Bahnhöfen.

Als geeignet haben sich Werte in den folgenden Bereichen herausgestellt:

$$0.2\ \mathrm{m} < L < 2.0\ \mathrm{m};$$

$$0.01\ \mathrm{m} < \Delta l < 0.2\ \mathrm{m}$$

und folglich

$$0.3 \text{ m} < l < 2.5 \text{ m}$$

Beispielsweise sind 10 Magnetfeldsensoren in einem Abstand $\Delta l$ von 10 cm angeordnet, sie decken somit eine Länge von 0.9 m in Fahrtrichtung ab. Die Magnetfeldsensoren 11.1...11.n werden von einer Steuereinheit 12 gesteuert und übermitteln ihre Messwerte an diese. Die Steuereinheit 12 ist an weitere schienenfahrzeuggebundene Komponenten angebunden, vorliegend an eine Anzeigeeinrichtung 21 für den Fahrzeugführer, eine Aufzeichnungseinrichtung 22 sowie eine Schnittstelle 23 zur Kommunikation mit fahrzeuginternen Einrichtungen, z. B. einer übergeordneten Steuerung, und/oder fahrzeugexternen Einrichtungen, z. B. einer Leitstelle.

Das Funktionsprinzip basiert auf der Messung der magnetischen Inhomogenitäten der Gleisanlage und deren Umgebung. Es nutzt die Tatsache, dass auf hinreichend kleinen Zeitskalen die magnetische Signatur an einem Ort unverändert bleibt.

Die magnetischen Signaturen werden im zeitlichen Abstand $\Delta \tau$ von den $n$ Magnetfeldsensoren 11.1...11.n in einer, zwei oder allen drei orthogonalen Raumrichtungen gleichzeitig gemessen.

Der zeitliche Abstand $\Delta \tau$ der wiederkehrend von den $n$ Magnetfeldsensoren 11.1...11.n gleichzeitig gemessenen magnetischen Signaturen muss genügend klein gewählt werden, um eine brauchbare Bestimmung von $\Delta x\,(t_i)$ sicherzustellen. Als Anhaltspunkt kann die Ungleichung

$$\Delta\tau(t_i) \leq \frac{\Delta l}{v(t_i)},$$

verwendet werden, wobei $v\,(t_i)$ die momentane Geschwindigkeit des Fahrzeugs zur Zeit $t_i$ bezeichnet. Geringfügig längere zeitliche Abstände $\Delta \tau$ sind wie oben erwähnt ebenfalls noch möglich.

Das zeitliche Abtastintervall $\Delta \tau\,(t_i)$ kann adaptiv der momentanen Geschwindigkeit $v(t_i)$ des Fahrzeugs angepasst werden. Dabei ist zu beachten, dass das Abtastintervall $\Delta \tau\,(t_i)$ den Kehrwert der minimal geforderte Messrate $R$ nicht übersteigt.

$$\Delta\tau(t_i) \leq \frac{1}{R}.$$

Alternativ kann für das Abtastintervall $\Delta \tau$ auch der feste Wert

$$\Delta\tau \leq \frac{\Delta l}{v_{max}}$$

festgelegt werden, wobei $v_{max}$ die maximale Geschwindigkeit des Schienenfahrzeugs bezeichnet.

Die Figuren 1B-1D illustrieren das Messverfahren gemäss der ersten Ausführungsform. Darin bezeichnet $B_z(x)$ die z-I<omponente der magnetischen Flussdichte als Funktion des Ortes x. Im Rahmen der Ausführungsbeispiele beinhalten die Messungen der Einfachheit halber lediglich diese eine Komponente, das Verfahren lässt sich aber ohne Weiteres auf die Verarbeitung von 2- oder 3-dimensionalen Messungen der Flussdichte verallgemeinern, d. h. die entsprechenden Magnetfeldsensoren können die magnetische Flussdichte in 2 oder 3 Polarisationsrichtungen erfassen.

Der Verlauf 30 der erwähnten Komponente der magnetischen Flussdichte entlang eines Abschnitts des Schienenwegs ist in der Figur 1B dargestellt.

In der Figur 1C sind die Positionen der Magnetfeldsensoren 11.1...11.n des erfindungsgemässen Systems entlang des Schienenwegs während aufeinanderfolgender Messungen zu den Zeitpunkten $t_{i-1} = t - \Delta\tau$ (unten), $t_i = t$ (Mitte) und $t_{i+1} = t + \Delta\tau$ (oben) schematisch dargestellt. Die bei aufeinanderfolgenden Messungen von der Gesamtheit der Magnetfeldsensoren 11.1...11.n abgedeckten Bereiche des Schienenwegs überlappen sich bei der entsprechenden Geschwindigkeit somit stark, so dass dieselbe Magnetfeldsignatur mehrfach erfasst wird.

Zunächst wird nun die relative Ortsverschiebung bestimmt. Dazu wird durch Vergleich aufeinanderfolgend gemessener magnetischer Signaturen zur Zeit $t_i$ die im Zeitintervall $\Delta\tau = t_i - t_{i-1}$ zurückgelegte Wegstrecke $\Delta x\,(t_i)$ bestimmt. Für diese Bestimmung können auch Messungen herangezogen werden, deren zeitlicher Abstand ein Mehrfaches von $\Delta\tau$ beträgt. Als Massstab für die Ortsbestimmung dient der bekannte Abstand $\Delta d = \Delta l$ zwischen benachbarten Magnet-

feldsensoren. In der Figur 1D ist dargestellt, wie die Verläufe 30.1, 30.2 zu den Zeitpunkten $t_{i-1} = t - \Delta\tau$ bzw. $t_i = t$ miteinander verglichen werden. Der Vergleich zwischen den Verläufen 30.1, 30.2 zur Ermittlung der räumlichen Verschiebung (bezogen auf das Schienenfahrzeug) kann mittels gängiger I<orrelationsverfahren erfolgen.

Da die magnetischen Signaturen wie erwähnt unter Einhaltung des Abtasttheorems von Nyquist im Ortsbereich gemessen werden, lässt sich ihr Verlauf an beliebigen äquidistanten Orten zwischen den n Magnetfeldsensoren durch Interpolation ermitteln. In Bezug auf den Verlauf 30.2 sind in der Figur 1D mittels den grauen Punkten auch die Messwerte der einzelnen Magnetfeldsensoren 11.1...11.n dargestellt, aus denen die Signatur rekonstruiert wurde.

Die insgesamt zurückgelegte Wegstrecke $x(t_I)$ zur Zeit $t_I$ ergibt sich mit $x_0(t_0) = 0$, dem Ausgangsort des Schienenfahrzeuges zu Beginn der Fahrt, zu

$$x(t_I) = \sum_{i=0}^{I} \bigl( \Delta x(t_i) \bigr) + x_0(t_0) \, .$$

Daraus ergibt sich wiederum die Fahrzeuggeschwindigkeit $v(t_i)$ zur Zeit $t_i$ wie folgt:

$$v(t_i) = \frac{\Delta x(t_i)}{\Delta \tau(t_i)} \, ,$$

wobei $\Delta\tau(t_i) = t_i - t_{i-1}$ das betrachtete Zeitintervall bezeichnet.

Der Stillstand des Fahrzeugs ergibt sich aus der Bestimmung der zurückgelegten Wegstrecke $\Delta x(t_i)$ im Zeitintervall $\Delta\tau(t_i) = t_i - t_{i-1}$. Ist dieser Wert Null, steht das Fahrzeug still.

Die zweite Ausführungsform, bei der die Messwerte der $n$ Magnetfeldsensoren in schneller zeitlicher Abfolge erfasst werden, wird im Zusammenhang mit den Figuren 2B-D beschrieben. Der Messvorgang ist dabei bis auf die zeitliche Abfolge der Datenerhebung identisch zur ersten Ausführungsform.

Die magnetische Signatur wird nun aber durch die $n$ Magnetfeldsensoren in schneller Folge im zeitlichen Abstand von $\Delta\delta(t_i)$ Sekunden hintereinander eingelesen. Dabei muss die Beziehung

$$n \, \Delta\delta(t_i) \leq \Delta\tau(t_i)$$

eingehalten werden. $\Delta\tau(t_i)$ bezeichnet das Abtastintervall zur Messung der magnetischen Signaturen mittels den n Magnetfeldsensoren.

Durch die zeitlich versetzte Erfassung der Messwerte verändern sich die Abstände zwischen den Orten, an denen die n Magnetfeldsensoren die magnetische Signatur der Gleisumgebung messen. Vorteilhafterweise erfolgt die Abfolge zur Aufzeichnung der magnetischen Signatur in Fahrtrichtung. Dann vergrössert sich der effektive Abstand $\Delta d(t_i)$ zwischen den Messorten mit wachsender Fahrzeuggeschwindigkeit $v(t_i)$ zu

$$\Delta d(t_i) = \Delta l + v(t_i) \, \Delta\delta(t_i) \, .$$

Dabei ist zu beachten, dass für alle $v(t_i)$ das erwähnte Abtasttheorem von Nyquist in Bezug auf $\Delta d(t_i)$ eingehalten ist. Die effektive Länge $d(t_i)$ des Sensors bestehend aus den $n$ Magnetfeldsensoren beträgt dann

$$d(t_i) = (n-1) \, \Delta d(t_i) = (n-1) \, \Delta l + (n-1) \, v(t_i) \, \Delta\delta(t_i)$$
$$= l + (n-1) \, v(t_i) \, \Delta\delta(t_i) \, ,$$

wobei $l = (n-1) \, \Delta l$ die Länge der $n$ in Fahrrichtung am Fahrzeug hintereinander angeordneten Magnetfeldsensoren bezeichnet. Die Positionen der Magnetfeldsensoren 11.1...11.n des erfindungsgemässen Systems entlang des Schienenwegs während aufeinanderfolgender Messzyklen mit Startzeitpunkten $t_{i-1} = t - \Delta\tau$ (unten), $t_i = t$ (Mitte) und $t_{i+1} = t + \Delta\tau$ (oben) sind in der Figur 2C schematisch dargestellt.

Unter Berücksichtigung der effektiven Abstände zwischen den Orten zur Messung der magnetischen Signatur kann die Bestimmung

- des Fahrzeugortes,

- der Fahrzeuggeschwindigkeit und

- der Stillstandserkennung

identisch zum Vorgehen bei der ersten Ausführungsform erfolgen.

Die im Zeitintervall $\Delta\tau\,(t_i)$ zurückgelegte Wegstrecke $\Delta x\,(t_i)$ soll den effektiven Abstand $\Delta d\,(t_i)$ zwischen den Messorten nicht wesentlich übersteigen, also im Wesentlichen:

$$\Delta x(t_i) \leq \Delta d(t_i)$$.

Die im Zeitintervall $\Delta\tau\,(t_i)$ zurückgelegte Wegstrecke $\Delta x\,(t_i)$ ist das Produkt aus der momentanen Fahrzeuggeschwindigkeit $v\,(t_i)$ und dem zeitlichen Abtastintervall $\Delta\tau\,(t_i)$:

$$\Delta x(t_i) = v(t_i)\,\Delta\tau(t_i)\,.$$

Der zeitliche Versatz der Messungen zwischen den einzelnen Magnetfeldsensoren kann einheitlich sein, oder es können verschiedene Zeitdifferenzen gewählt werden. Mischformen der ersten und der zweiten Ausführungsform sind möglich, d. h. in weiteren Ausführungsformen des erfindungsgemässen Verfahrens können gewisse der n Magnetfeldsensoren ihre Messungen gleichzeitig durchführen, während andere Messungen zeitlich dazu versetzt stattfinden. Der Ansatz gemäss dem zweiten Ausführungsbeispiel lässt sich ohne Weiteres auch auf solche Betriebsweisen verallgemeinern.

Die Erfindung ist nicht auf die dargestellten Ausführungsbeispiele beschränkt. Insbesondere die Anzahl und Anordnung der Magnetfeldsensoren kann anders gewählt werden. Wie oben erwähnt, kann das Magnetfeld in zwei oder drei Dimensionen erfasst werden, zudem können zur Ermittlung der zu bestimmenden Grössen Daten herangezogen werden, die zu mehr als zwei Messzeitpunkten erfasst wurden.

Zusammenfassend ist festzustellen, dass die Erfindung ein Verfahren zur Erfassung einer Bewegung eines Schienenfahrzeugs schafft, welches insbesondere bei tiefen Geschwindigkeiten aktuelle und präzise Ergebnisse ermöglicht.

**Patentansprüche**

1.  Verfahren zur Erfassung einer Bewegung eines Schienenfahrzeugs (1) entlang eines Schienenwegs (2), umfassend folgende Schritte:

    a) innerhalb eines ersten Zeitintervalls Erfassen von Werten einer lokalen magnetischen Flussdichte mittels mindestens drei in einer Fahrtrichtung des Schienenfahrzeugs beabstandet am Schienenfahrzeug angeordneten Magnetfeldsensoren (11.1...11.n); und
    b) Ermitteln einer ersten lokalen magnetischen Signatur aus den im ersten Zeitintervall erfassten Werten, entsprechend einem ersten ortsabhängigen Verlauf der lokalen magnetischen Flussdichte;

    und **gekennzeichnet durch** die folgenden Schritte:

    c) innerhalb eines zweiten Zeitintervalls Erfassen von Werten der lokalen magnetischen Flussdichte mittels der mindestens drei am Schienenfahrzeug angeordneten Magnetfeldsensoren;
    d) Ermitteln einer zweiten lokalen magnetischen Signatur aus den im zweiten Zeitintervall erfassten Werten, entsprechend einem zweiten ortsabhängigen Verlauf der lokalen magnetischen Flussdichte; und
    e) Bestimmen einer vom Schienenfahrzeug zurückgelegten Wegstrecke entlang des Schienenwegs aus einem Vergleich der ersten lokalen magnetischen Signatur mit der zweiten lokalen magnetischen Signatur.

2.  Verfahren nach Anspruch 1, **dadurch gekennzeichnet, dass** eine Abtastrate der mindestens drei Magnetfeldsensoren (11.1...n) derart gewählt ist, dass

$$\Delta\tau(t_i) \leq a\,\frac{\Delta l}{v(t_i)},$$

wobei $\Delta\tau(t_i)$ einen zeitlichen Abstand der zweiten lokalen magnetischen Signatur von der ersten lokalen magnetischen Signatur, $\Delta l$ den gegenseitigen Abstand benachbarter Magnetfeldsensoren und $v(t_i)$ die erwartete Geschwindigkeit bezeichnet und a kleiner ist als 2, bevorzugt kleiner als 1.5, besonders bevorzugt kleiner als 1.2.

3. Verfahren nach Anspruch 2, **dadurch gekennzeichnet, dass** die erwartete Geschwindigkeit anhand von vorbestimmten Geschwindigkeiten des Schienenfahrzeugs veränderlich festgelegt wird.

4. Verfahren nach Anspruch 2 oder 3, **dadurch gekennzeichnet, dass** eine Dauer des ersten Zeitintervalls und eine Dauer des zweiten Zeitintervalls den zeitlichen Abstand der zweiten lokalen magnetischen Signatur von der ersten lokalen magnetischen Signatur nicht überschreiten.

5. Verfahren nach Anspruch 4, **dadurch gekennzeichnet, dass** im ersten Zeitintervall die Werte von den mindestens drei Magnetfeldsensoren im Wesentlichen gleichzeitig erfasst werden und dass im zweiten Zeitintervall die Werte von den mindestens drei Magnetfeldsensoren im Wesentlichen gleichzeitig erfasst werden.

6. Verfahren nach Anspruch 4, **dadurch gekennzeichnet, dass** im ersten Zeitintervall die Werte von mindestens zwei der mindestens drei Magnetfeldsensoren zeitlich versetzt erfasst werden und dass im zweiten Zeitintervall die Werte von mindestens zwei der mindestens drei Magnetfeldsensoren zeitlich versetzt erfasst werden, wobei ein Versatz insbesondere so gewählt ist, dass eine zeitliche Abfolge der Erfassung in Fahrtrichtung erfolgt.

7. Verfahren nach einem der Ansprüche 1 bis 6 **dadurch gekennzeichnet, dass** ein maximaler gegenseitiger Abstand der mindestens drei Magnetfeldsensoren in Fahrtrichtung eine maximale Länge zu erfassender magnetischer Signaturen übersteigt.

8. Verfahren nach einem der Ansprüche 1 bis 7, **dadurch gekennzeichnet, dass** ein gegenseitiger Abstand von benachbarten der mindestens drei Magnetfeldsensoren in Fahrtrichtung derart gewählt ist, dass das Abtasttheorem von Nyquist in Bezug auf die für die Bestimmung der Wegstrecke relevanten Anteile der magnetischen Signaturen im Ortsbereich erfüllt ist.

9. Verfahren nach einem der Ansprüche 1 bis 8, **gekennzeichnet durch** den zusätzlichen Schritt des Bestimmens einer momentanen Geschwindigkeit des Schienenfahrzeugs als Verhältnis zwischen der bestimmten Wegstrecke und dem zeitlichen Abstand der zweiten lokalen magnetischen Signatur von der ersten lokalen magnetischen Signatur.

10. Verfahren nach einem der Ansprüche 1 bis 9, **gekennzeichnet durch** den zusätzlichen Schritt der Stillstandserkennung des Schienenfahrzeugs anhand der bestimmten Wegstrecke.

11. Verfahren nach einem der Ansprüche 1 bis 10, **dadurch gekennzeichnet, dass** zur Funktionskontrolle ein Testsignal entsprechend einer vorgegebenen Fahrgeschwindigkeit ausserhalb eines möglichen Geschwindigkeitsbereichs erzeugt und auf Stufe der Magnetfeldsensoren eingekoppelt wird.

12. An einem Schienenfahrzeug anbringbare Vorrichtung zur Erfassung einer Bewegung des Schienenfahrzeugs (1) entlang eines Schienenwegs (2), umfassend

   a) mindestens drei in einer Fahrtrichtung des Schienenfahrzeugs beabstandet am Schienenfahrzeug angeordnete Magnetfeldsensoren (11.1...n); und
   b) eine Steuerung (12), die Messsignale von den mindestens drei Magnetfeldsensoren empfängt und derart betrieben wird, dass die Bewegung des Schienenfahrzeugs anhand der Messsignale gemäss einem Verfahren nach einem der Ansprüche 1 bis 11 ermittelt wird.

13. Vorrichtung nach Anspruch 12, **dadurch gekennzeichnet, dass** die Magnetfeldsensoren jeweils in gleicher Distanz zueinander parallel zur Fahrtrichtung am Schienenfahrzeug angeordnet sind.

14. Vorrichtung nach Anspruch 12, **dadurch gekennzeichnet, dass** die Magnetfeldsensoren in unterschiedlichen Abständen zueinander am Schienenfahrzeug angeordnet sind.

**Claims**

1.  Method for detecting a movement of a rail vehicle (1) along a rail track (2), comprising the following steps:

    a) within a first time interval, detecting values of a local magnetic flux density by means of at least three magnetic field sensors (11.1...11.n) arranged on the rail vehicle at a distance in a direction of travel of the rail vehicle; and
    b) determining a first local magnetic signature from the values detected in the first time interval, corresponding to a first location-dependent profile of the local magnetic flux density;

    and **characterized by** the following steps:

    c) within a second time interval, detecting values of the local magnetic flux density by means of the at least three magnetic field sensors arranged on the rail vehicle;
    d) determining a second local magnetic signature from the values detected in the second time interval, corresponding to a second location-dependent profile of the local magnetic flux density; and
    e) determining a distance covered by the rail vehicle along the rail track from a comparison of the first local magnetic signature with the second local magnetic signature.

2.  Method according to Claim 1, **characterized in that** a sampling rate of the at least three magnetic field sensors (11.1...n) is selected in such a way that

$$\Delta\tau(t_i) \leq a \frac{\Delta l}{v(t_i)},$$

    where $\Delta\tau(t_i)$ denotes a time distance of the second local magnetic signature from the first local magnetic signature, $\Delta l$ denotes the mutual spacing of adjacent magnetic field sensors and $v(t_i)$ denotes the expected speed and a is less than 2, preferably less than 1.5, particularly preferably less than 1.2.

3.  Method according to Claim 2, **characterized in that** the expected speed is fixed in a variable manner on the basis of predetermined speeds of the rail vehicle.

4.  Method according to Claim 2 or 3, **characterized in that** a duration of the first time interval and a duration of the second time interval do not exceed the time distance of the second local magnetic signature from the first local magnetic signature.

5.  Method according to Claim 4, **characterized in that**, in the first time interval, the values of the at least three magnetic field sensors are detected substantially simultaneously and **in that**, in the second time interval, the values of the at least three magnetic field sensors are detected substantially simultaneously.

6.  Method according to Claim 4, **characterized in that**, in the first time interval, the values of at least two of the at least three magnetic field sensors are detected in a temporally offset manner and **in that**, in the second time interval, the values of at least two of the at least three magnetic field sensors are detected in a temporally offset manner, an offset being selected in particular in such a way that a temporal sequence of the detection takes place in the direction of travel .

7.  Method according to one of Claims 1 to 6, **characterized in that** a maximum mutual spacing of the at least three magnetic field sensors in the direction of travel exceeds a maximum length of magnetic signatures to be detected.

8.  Method according to one of Claims 1 to 7, **characterized in that** a mutual spacing of adjacent ones of the at least three magnetic field sensors in the direction of travel is selected in such a way that the Nyquist sampling theorem is satisfied with respect to the portions of the magnetic signatures in the local region that are relevant for the determination of the distance.

9.  Method according to one of Claims 1 to 8, **characterized by** the additional step of determining an instantaneous speed of the rail vehicle as a ratio between the determined distance and the time distance of the second local magnetic signature from the first local magnetic signature.

**10.** Method according to one of Claims 1 to 9, **characterized by** the additional step of detecting a standstill of the rail vehicle on the basis of the determined distance.

**11.** Method according to one of Claims 1 to 10, **characterized in that**, for functional control, a test signal corresponding to a predefined travel speed is generated outside a possible speed range and is coupled in at the level of the magnetic field sensors.

**12.** Device which can be attached to a rail vehicle for detecting a movement of the rail vehicle (1) along a rail track (2), comprising

a) at least three magnetic field sensors (11.1...n) arranged on the rail vehicle at a distance in a direction of travel of the rail vehicle; and
b) a controller (12) which receives measurement signals from the at least three magnetic field sensors and is operated in such a way that the movement of the rail vehicle is determined on the basis of the measurement signals according to a method according to one of Claims 1 to 11.

**13.** Device according to Claim 12, **characterized in that** the magnetic field sensors are in each case arranged on the rail vehicle at the same distance from one another parallel to the direction of travel .

**14.** Device according to Claim 12, **characterized in that** the magnetic field sensors are arranged on the rail vehicle at different distances from one another.

**Revendications**

**1.** Procédé, destiné à détecter un déplacement d'un véhicule ferroviaire (1) le long d'une voie ferroviaire (2), comprenant les étapes suivantes, consistant à :

a) dans un premier intervalle de temps, détecter des valeurs d'une densité locale de flux magnétique au moyen d'au moins trois capteurs (11.1 ... 11.n) de champ magnétique placés avec un écart sur le véhicule ferroviaire dans une direction de déplacement du véhicule ferroviaire ; et
b) déterminer une première signature magnétique locale à partir des valeurs détectées dans le premier intervalle de temps, en fonction d'une première courbe dépendant du lieu de la densité locale de flux magnétique ;

et **caractérisé par** les étapes suivantes, consistant à :

c) dans un deuxième intervalle de temps, détecter des valeurs de la densité locale de flux magnétique au moyen des au moins trois capteurs de champ magnétique placés sur le véhicule ferroviaire ;
d) déterminer une deuxième signature magnétique locale à partir des valeurs détectées dans le deuxième intervalle, en fonction d'une deuxième courbe dépendant du lieu de la densité locale de flux magnétique ; et
e) déterminer un itinéraire parcouru par le véhicule ferroviaire le long du trajet ferroviaire à partir d'une comparaison de la première signature magnétique locale avec la deuxième signature magnétique locale.

**2.** Procédé selon la revendication 1, **caractérisé en ce qu'**un taux de balayage des au moins trois capteurs (11.1 ... 11.n) de champ magnétique est sélectionné de telle sorte que

$$\Delta\tau(t_i) \leq a \; \frac{\Delta l}{v(t_i)'}$$

$\Delta\tau(t_i)$ désignant un écart temporel entre la deuxième signature magnétique locale et la première signature magnétique locale, $\Delta l$ désignant l'écart réciproque entre deux capteurs de champ magnétique voisins et $v(t_i)$ désignant la vitesse attendue et a étant inférieur à 2, de préférence inférieur à 1.5, de manière particulièrement préférentielle, inférieur à 1.2.

**3.** Procédé selon la revendication 2, **caractérisé en ce que** la vitesse attendue est fixée de manière variable à l'aide de vitesses prédéterminées du véhicule ferroviaire.

**4.** Procédé selon la revendication 2 ou 3, **caractérisé en ce qu'**une durée du premier intervalle de temps et une durée du deuxième intervalle de temps ne dépassent par l'écart temporel entre la deuxième signature magnétique locale et la première signature magnétique locale.

**5.** Procédé selon la revendication 4, **caractérisé en ce que** dans le premier intervalle de temps, les valeurs des au moins trois capteurs de champ magnétique sont détectées de manière sensiblement simultanée et **en ce que** dans le deuxième intervalle de temps, les valeurs des au moins trois capteurs de champ magnétique sont détectées de manière sensiblement simultanée.

**6.** Procédé selon la revendication 4, **caractérisé en ce que** dans le premier intervalle de temps, les valeurs d'au moins deux des au moins trois capteurs de champ magnétique sont détectées avec un décalage temporel et **en ce que** dans le deuxième intervalle de temps, les valeurs d'au moins deux des au moins trois capteurs de champ magnétique sont détectées avec un décalage temporel, un décalage étant sélectionné notamment de sorte à donner lieu à une séquence temporelle de la détection dans la direction de déplacement.

**7.** Procédé selon l'une quelconque des revendications 1 à 6, **caractérisé en ce qu'**un écart réciproque maximal des au moins trois capteurs de champ magnétique dans la direction de déplacement dépasse une longueur maximale des signatures magnétiques à détecter.

**8.** Procédé selon l'une quelconque des revendications 1 à 7, **caractérisé en ce qu'**un écart réciproque dans la direction de déplacement entre des capteurs de champ magnétique voisins des au moins trois capteurs de champ magnétique est sélectionné de telle sorte que le théorème de balayage de Nyquist soit satisfait en ce qui concerne les parts des signatures magnétiques qui sont déterminantes pour la détermination de l'itinéraire.

**9.** Procédé selon l'une quelconque des revendications 1 à 8, **caractérisé par** l'étape supplémentaire consistant à déterminer une vitesse momentanée du véhicule ferroviaire en tant que relation entre l'itinéraire déterminé et l'écart temporel entre la deuxième signature magnétique locale et la première signature magnétique locale.

**10.** Procédé selon l'une quelconque des revendications 1 à 9, **caractérisé par** l'étape supplémentaire consistant à identifier un arrêt du véhicule ferroviaire à l'aide de l'itinéraire déterminé.

**11.** Procédé selon l'une quelconque des revendications 1 à 10, **caractérisé en ce que** pour le contrôle fonctionnel, un signal de test est généré en fonction d'une vitesse de déplacement prédéterminée à l'extérieur d'une plage de vitesses possible et injecté au niveau des capteurs de champ magnétique.

**12.** Dispositif susceptible d'être monté sur un véhicule ferroviaire, destiné à détecter un déplacement d'un véhicule ferroviaire (1) le long d'un trajet ferroviaire (2), comprenant

a) au moins trois capteurs (11.1 ... n) de champ magnétique placés avec un écart sur le véhicule ferroviaire dans une direction de déplacement du véhicule ferroviaire ; et
b) un système de commande (12), qui réceptionne des signaux de mesure de la part des au moins trois capteurs de champ magnétique et qui est exploité de telle sorte que le déplacement du véhicule ferroviaire soit déterminé à l'aide des signaux de mesure d'après un procédé selon l'une quelconque des revendications 1 à 11.

**13.** Dispositif selon la revendication 12, **caractérisé en ce que** les capteurs de champ magnétique son placés sur le véhicule ferroviaire chaque fois à distance mutuelle égale à la parallèle de la direction de déplacement.

**14.** Dispositif selon la revendication 12, **caractérisé en ce que** les capteurs de champ magnétique sont placés à différents écarts mutuel sur le véhicule ferroviaire.

**Fig. 1A**

1

10

11.1

21

12

23

22

2

**Fig. 1B**

$B_z(x)$

11.n

30

$\Delta l$

l

x

**Fig. 1C**

t

11.1                    11.n

11.1                         11.n

11.1                              11.n

x

**Fig. 1D**

$B_z(x)$

$\Delta$ ⬚⬚⬚

30.1            30.2

x

**Fig. 2A**

1

10

11.1

21

23

12

22

2

11.n

30

$B_z(x)$

$\Delta l$

l

**Fig. 2B**

11.1

11.1

11.1

11.n

11.n

11.n

t

X

**Fig. 2C**

$B_z(x)$

$\Delta$ ⬚⬚⬚

30.1

30.2

X

**Fig. 2D**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 3663769 A1

- EP 1910848 B1

### In der Beschreibung aufgeführte Nicht-Patentliteratur

- **K. OSTASZEWSKI et al.** Magnetische Odometrie - Neuartige Methode zur Bestimmung der Fahrgeschwindigkeit von Schienenfahrzeugen. *ZEVrail*, September 2021, 332-339

- **H. NYQUIST**. Certain Topics in Telegraph Transmission Theory. *Transactions of the American Institute of Electrical Engineers*, April 1928, vol. 47 (2), 617-644